# EUROPEAN PATENT SPECIFICATION

(11) **EP 0 968 340 B1**
(45) Date of publication and mention of the grant of the patent: **09.06.2004**
(21) Application number: 97950554.2
(22) Date of filing: 16.12.1997
(51) Int. Cl.: E04D 13/08, F16L 3/12

(54) **PIPE HOLDER**
ROHRHALTER
SUPPORT DE TUYAU

(30) Priority: 18.12.1996 SE 9604645
(43) Date of publication of application: 05.01.2000
(73) Proprietor: Lindab AB, 269 82 Bastad (SE)
(72) Inventor: FELLERT, Örjan, S-260 83 Vejbystrand (SE); ANDERSSON, Tommy, S-262 62 Ängelholm (SE); BJÖRKLUND, Tonny, S-269 00 Bastad (SE); HANSSON, Jan, S-260 83 Vejbystrand (SE)
(74) Representative: Rostovanyi, Peter
(86) International application number: PCT/SE1997/002103
(87) International publication number: WO 1998/027293

(56) References cited:
- EP-A- 0 135 698
- EP-A- 0 276 640
- EP-A- 0 351 524
- CH-A- 643 338
- US-A- 5 478 033

## Description

### Field of the Invention

The present invention relates to a holder for pipes, especially downpipes, and more specifically concerns a pipe holder of the type as defined in the preamble to claim 1 as based on CH-643 338.

### Background Art

There are different types of downpipe holders available on the market. For instance, the brochure entitled "Rainwater System", LindabRainline and issued by the applicant in 1995 shows a pipe holder designated SVHA. This known downpipe holder comprises a substantially cylindrical body, which in technical language is referred to as pipe clamp and is adapted to grasp the pipe. From the pipe clamp project fastening means in the form of two legs to be mounted on a wall. The pipe clamp is slotted, and for clamping round the pipe, use is made of a separate wedge which is axially moved into engagement with the two opposite terminal edges of the pipe clamp. The mounting of this prior-art pipe holder is evident from passages 6 and 7 on p. 7 in the above-mentioned brochure.

Reference is also made to the catalogue entitled "Tak-väggkatalogen" issued by the applicant in 1994 and showing on p. 26 two pipe clamps designated SVHÅ and SVSTI. The SVHÅ pipe clamp is mounted on the wall by means of two legs, while the SVSTI pipe clamp is anchored in the wall by means of a so-called spike which is riveted to the body of the pipe clamp. These two prior-art pipe clamps are clamped round the pipe by means of a separate locking member which is applied, by wedge action, on the opposite terminal edges of the pipe clamp.

A drawback which the pipe holders described above have in common is that they consist of two parts (pipe clamp and wedge), and that as a rule a tool (hammer) is required when the fitter is to clamp the pipe clamp by means of the wedge. The mounting of these prior-art pipe holders is sometimes experienced to be unnecessarily complicated.

There is thus a need of an improved pipe holder.

Further examples of prior-art pipe holders or pipe clamps, which consist of two parts, are shown in DK-C-20166, DK-B-130,196 and EP-A-0 079 417.

Regarding prior art, mention can also be made of FR-A-2,071,357, which in Figs 1-2 shows a holder made of plastic and adapted to encompass plastic pipes through which liquids having different temperatures flow. For adaptation to different pipe diameters depending on temperature changes in the pipe, the annular holder has on its inside a number of projections. This prior-art holder is not intended for downpipes, and also the French document does not discuss any of the problems involved in pipe holders where the present invention may be applied.

### Summary of the Invention

The object of the invention is to provide a pipe holder which is improved over prior art and which allows more rational mounting and simplified handling.

This and other objects which will appear from the following specification have now been achieved by means of a pipe holder which is of the type described by way of introduction and which in addition has the distinguishing features stated in the characterising clause of'claim 1, preferred embodiments being defined in the appended subclaims.

The pipe holder according to the invention is extremely advantageous by being attachable to the pipe with simple operations and without requiring any tool, which implies a considerable rationalisation compared to prior art. The new pipe holder is fixed to the pipe by a simple clamping and snap action, which besides in a preferred embodiment allows an intermediate position, in which the pipe holder can be moved along the pipe.

A special advantage is that the invention is generally applicable to many types of pipe holders independently of the appearance of their fastening means.

### Brief Description of the Drawings

The invention will now be described in more detail with reference to the accompanying drawings, which illustrate non-limiting embodiments and in which
Figs 1-2 are two oblique perspective views of a pipe holder according to an embodiment of the invention,
Figs 3-4 are end views of the pipe holder before and after fitting round a pipe,
Fig. 5 is a corresponding end view of the pipe holder in an intermediate position, and
Fig. 6 illustrates a different pipe holder to which the invention is applicable.

### Description of Preferred Embodiments of the Invention

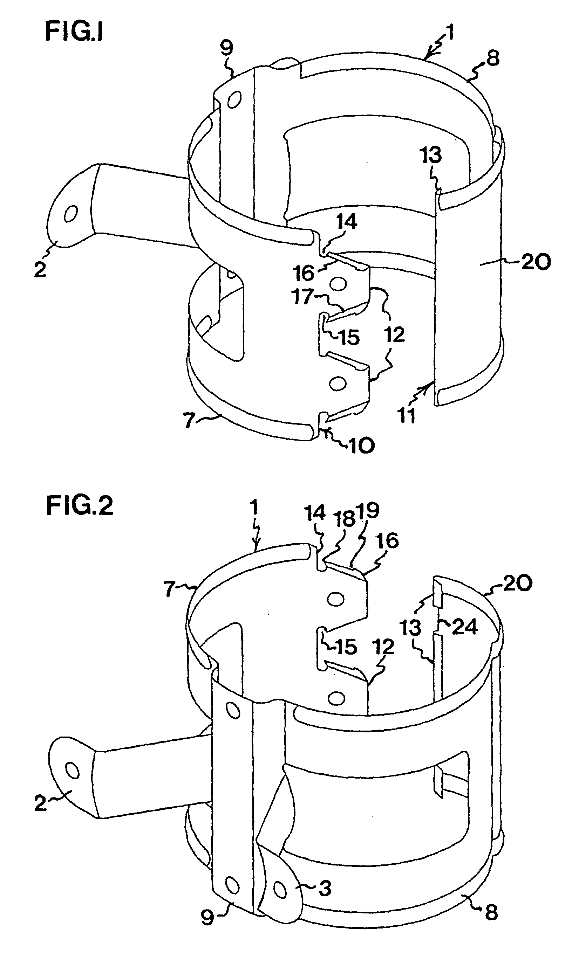

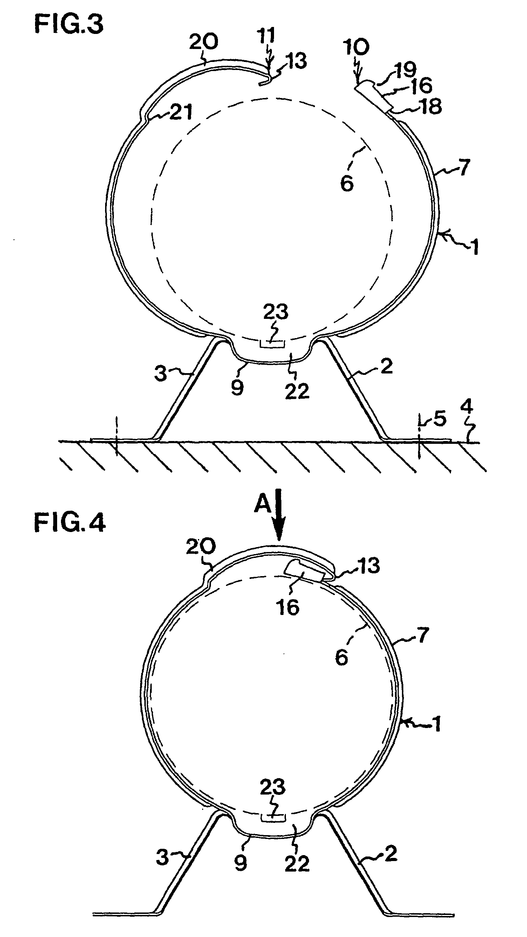

Figs 1-2 show a pipe holder according to an embodiment of an invention, which comprises a cylindrical and circumferentially resilient body, which is made in one piece and which is referred to as pipe clamp 1. From the pipe clamp 1 project fastening means which in this embodiment have the form of two legs 2, 3 with fixing holes for mounting on a wall, as illustrated in Fig. 3 where two fixing screws 5 are schematically shown.

The pipe clamp 1, which is adapted to grasp a pipe 6, preferably a downpipe, which is indicated by dashed lines in Fig. 3, comprises two substantially semicircular parts 7, 8, which are interconnected via a rear portion 9 which extends axially, i.e. in parallel with the centre axis of the pipe clamp 1, and thus in the mounting position in parallel with the centre axis of the pipe 6.

The pipe clamp part 7 has an end portion 10 which, in respect of the circumferential direction of the pipe clamp 1, is positioned opposite to an end portion 11 of the pipe clamp part 8. The pipe clamp parts 7, 8 have a spring-back effect, implying that they essentially return to the position shown in Fig. 1 if the spaced-apart end portions 10, 11 are moved closer together or if they are slightly separated.

The two end portions 10, 11 are, in respect of the circumferential direction of the pipe clamp 1, positioned essentially diametrically opposite to the rear portion 9, from which the legs 2, 3 project. This makes the pipe clamp 1 symmetrical, which promotes its resilient effect, as will be described in more detail below.

The end portion 10 of the part 7 has engagement means in the form of two axially spaced-apart tongues 12 which are adapted to engage corresponding engagement means arranged in the end portion 11 of the part 8 and being in the form of an axial edge portion with elongate hooks 13 for engaging the tongues 12.

Each tongue 12 has in its transition to the pipe clamp body two opposite recesses 14, 15, from which two protruding flanges 16, 17 extend in the direction of the free end of the tongue 12. Each flange 16, 17 has an inner hook portion 18 and an outer hook portion 19, as is best seen from Fig. 2.

Further the pipe clamp part 8 has at its end an axial curved portion 20, which in respect of the pipe clamp 1 is curved outwards and which will be described in more detail below.

The use of the pipe holder according to this embodiment will now be described in more detail with reference especially to Figs 3-5.

First the pipe holder is mounted by its legs 2, 3 being screwed to the vertical wall 4 by means of the fixing screws 5. Then the pipe 6 is placed inside the pipe clamp 1 such that the resilient pipe clamp parts 7, 8 grasp the pipe 6. The pipe 6 is placed in the pipe clamp 1 either by being inserted axially into the same or by the pipe clamp parts 7, 8 being expanded and the pipe 6 being moved into the gap between the end portions 10, 11 (cf. Fig. 3). The fitter then closes by hand the pipe clamp 1 by moving the end portion 11 of the part 8 into snap engagement with the end portion 10 of the part 7, whereby the inside of the pipe clamp 1 is clamped against the outside of the pipe 6 for reliable holding of the pipe.

In the fitting operation, the engagement means of the pipe clamp part 8, i.e. the hooks 13, are moved into engagement with corresponding engagement means on the pipe clamp part 7, i.e. the tongues 12, such that the hooks 13 engage, by snap action, the inner hook portions 18 of the flanges 16, 17. This fitting operation can be carried out completely without any tool, and the final engagement between the hooks 13 and the hook portions 18 is accomplished by the fitter pressing the curved portion 20 radially inwards in respect of the pipe 6 and the pipe clamp 1, as indicated by means of arrow A in Fig. 4.

When the engaging operation is being completed, the hooks 13 slide on the flanges 16, 17 essentially in the circumferential direction of the pipe clamp 1 (clockwise with regard to Fig. 4). When sufficient force is applied in the direction of arrow A, the hooks 13 snap in place behind the inner hook portions 18, and a very reliable snap engagement is achieved. The reliable engagement is promoted especially by the end portions 10, 11 of the two pipe clamp parts 7, 8 overlapping each other in the complete engagement position (Fig. 4).

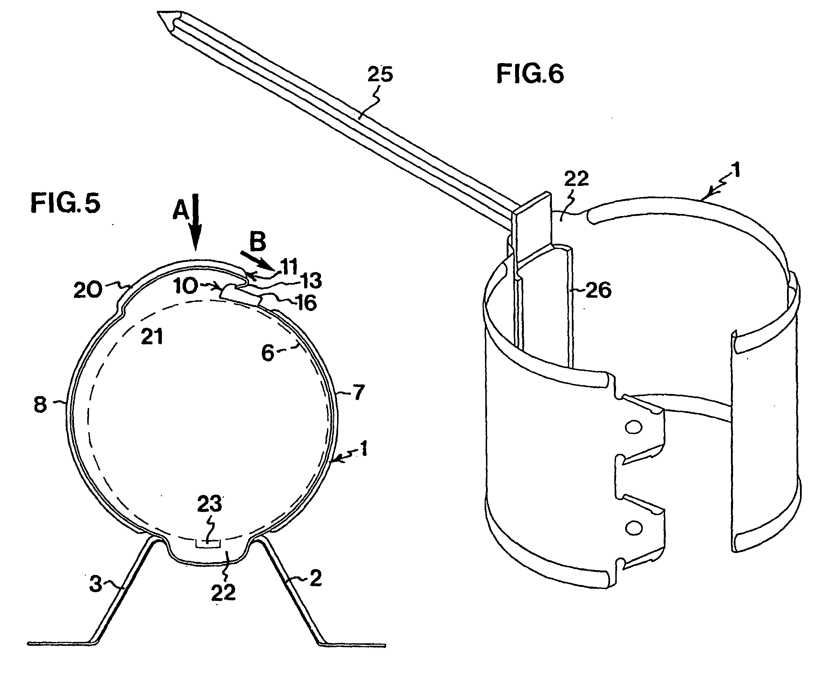

Fig. 5 shows an intermediate position, in which the hooks 13 engage the outer hook portions 19 of the flanges 16, 17. In this position, the inside of the pipe clamp 1 is spaced from the outside of the pipe 6, which means that the pipe clamp 1 and the pipe 6 can be displaced relatively to each other for adjustment, for instance before the final mounting. For the final fitting of the pipe clamp 1, the fitter applies, as described above, a force upon the curved portion 20 in the direction of arrow A, which thanks to the flange guiding between the hooks 13 and the flanges 16, 17 results in displacement of the end portion 11 in the direction of arrow B (tangentially) to the engagement position shown in Fig. 4.

In the above application of force in the direction of arrow A, the curved portion 20 springs radially inwards and is simultaneously extended in the circumferential direction (clockwise in Fig. 5), such that the hooks 13 snap into engagement with the inner hook portions 18. When the force is released, the curved portion 20 springs back radially outwards and thus yields a tightening of the pipe clamp 1 against the pipe 6. The hooks 13 are pulled against the inner hook portions 18, and the inner edge or ridge 21, positioned opposite to the hooks 13, of the curved portion 20 is made to abut against the outside of the pipe 6.

By the rear portion 9 of the pipe clamp 1 curving outwards, an axial groove 22 forms, which contributes to giving the pipe clamp parts 7, 8 their spring-back effect. The groove 22 also confers the advantage that the folded seam 23 of the downpipe 6 can be received therein.

With this new type of pipe holder, very rational mounting is achieved without requiring any tool. It is also a great advantage that the pipe holder, which preferably is made of thin metal sheet, is made in one piece. No loose wedge for accomplishing the clamping of the pipe clamp round the pipe is required.

The engagement between the end portions 10, 11 of the pipe clamp 1 is, as mentioned above, extremely reliable, and the pipe clamp 1 usually cannot be released manually. If, for some reason, one wants to release the pipe clamp 1, use is made of a pointed object, for instance a screw driver (not shown), which is inserted in a recess 24 (Fig. 2) in the end portion 11 of the pipe clamp part 8 in connection with the hooks 13. The engagement may then be prized open.

Finally, it should be pointed out that the invention is applicable to many different types of pipe holder. Fig. 6 shows a variant, where the pipe clamp 1 is connected to another fastening means in the form of a so-called spike 25, which has a part 26 positioned on the inside of the pipe clamp 1, more precisely in the groove 22. This alternative fastening means 25, 26 may constitute a separate part that is connected to the pipe clamp 1 by suitable engagement between engaging portions (not shown) of the fastening means 25, 26 and the pipe clamp 1, respectively. For instance, the part 26 may have projecting hooks (not shown) for engaging the edge portions of the pipe clamp 1.

It will be appreciated that the invention is not limited to the snap-acting engagement means described above, and a number of alternative hooks and the like are included in the scope of the inventive idea as expressed in the appended claims. A variant is that the edges of the two end portions are designed as elongate hooks which are made to overlap each other for achieving a clamping effect.

## Claims

1. A holder for downpipes, comprising a cylindrical body (1) adapted to grasp a pipe (6), and fastening means (2, 3; 25) projecting from the body and intended for mounting the holder on a wall (4) or the like, the body being resilient and having two end portions (10, 11) which are opposite in respect of their circumferential direction and positioned essentially diametrically opposite to a part (9) of the body from which said fastening means project, the two end portions (10, 11) of the body having engagement means (12, 13) provided with hooks for engaging each other for fitting and clamping the body round a pipe, **characterised in that** said part (9) of the body (1), from which the fastening means (2, 3; 25) project, has a groove (22) extending parallel to the longitudinal axis of the cylindrical body and curving outwards from said cylindrical body, the groove (22) producing a spring-back effect on the two end portions (10, 11).

2. A holder as claimed in claim 1, wherein said engagement means (12, 13) have a snap-in effect.

3. A holder as claimed in claim 1 or 2, wherein the engagement means of one end portion (11) comprises an edge portion which is parallel to the longitudinal axis of the cylindrical body and has at least one elongate hook (13) which is adapted to engage the engagement means (12) of the other end portion (10), said other end portion comprising at least one hook (18) for locking engagement with said elongate hooks (13).

4. A holder as claimed in claim 3, wherein the engagement means (12) of the other end portion (10) has flanges (16, 17) for guiding said elongate hooks (13) into engagement with the hooks (18) on the opposite end portion (11) in said fitting operation.

5. A holder as claimed in claim 3 or 4, wherein the engagement means of the other end portion (10) comprises two in parallel to the longitudinal axis of the cylindrical body spaced-apart tongues (12) which each have hook portions (18, 19) for locking engagement with said elongate hooks (13) of the opposite end portion (11).

6. A holder as claimed in any one of the preceding claims, wherein the one end portion (11) comprises an axial curved portion (20) which is parallel to the longitudinal axis of the cylindrical body and resilient essentially in the radial direction.

7. A holder as claimed in claim 6, wherein the curved portion (20) is curved outwards in respect of the body (1).

8. A holder as claimed in claim 6 or 7, wherein the curved portion (20) has an inner axial ridge (21), which is parallel to the longitudinal axis of the cylindrical body / and spaced from said elongate hooks (13), the inner axial ridge being adapted to abut against a pipe (6) in said fitting operation.

9. A holder as claimed in any one of the preceding claims, wherein the two end portions (10, 11) in their engagement position overlap each other at least partly.

10. A holder as claimed in any one of the preceding claims, which is made in one single piece, preferably of thin metal sheet.

11. A holder as claimed in any one of claims 1-10, wherein said fastening means (25) is a separate part to be connected to the body (1).

## Patentansprüche

1. Halter für Fallrohre, der einen zylindrischen Körper (1), der so eingerichtet ist, dass er ein Rohr (6) umgreift, und Befestigungseinrichtungen (2, 3; 25) umfasst, die von dem Körper vorstehen und dazu dienen, den Halter an einer Wand (4) oder dergleichen anzubringen, wobei der Körper elastisch ist und zwei Endabschnitte (10, 11) aufweist, die einander bezüglich ihrer Umfangsrichtung gegenüberliegen und im Wesentlichen diametral gegenüberliegend zu einem Teil (9) des Körpers angeordnet sind, von dem die Befestigungseinrichtungen vorstehen, wobei die beiden Endabschnitte (10, 11) des Körpers Eingriffseinrichtungen (12, 13) aufweisen, die mit Haken versehen sind, um miteinander in Eingriff zu kommen und den Körper um ein Rohr herumzupassen und festzuklemmen, **dadurch gekennzeichnet, dass** der Teil (9) des Körpers (1), von dem die Befestigungseinrichtungen (2, 3; 25) vorstehen, eine Nut (22) hat, die sich parallel zu der Längsachse des zylindrischen Körpers erstreckt und sich von dem zylindrischen Körper nach außen krümmt, wobei die Nut (22) eine Rückfederwirkung auf die beiden Endabschnitte (10, 11) ausübt.

2. Halter nach Anspruch 1, wobei die Eingriffseinrichtungen (12, 13) eine Einschnappwirkung haben.

3. Halter nach Anspruch 1 oder 2, wobei die Eingriffseinrichtung eines Endabschnitts (11) einen Kantenabschnitt umfasst, der parallel zu der Längsachse des zylindrischen Körpers ist und wenigstens einen länglichen Haken (13) aufweist, der mit der Eingriffseinrichtung (12) des anderen Endabschnitts (10) in Eingriff kommt, wobei der andere Endabschnitt wenigstens einen Haken (18) umfasst, der mit den länglichen Haken (13) in arretierenden Eingriff kommt.

4. Halter nach Anspruch 3, wobei die Eingriffseinrichtung (12) des anderen Endabschnitts (10) Flansche (16,17) aufweist, die die länglichen Haken (13) bei dem Passvorgang in Eingriff mit den Haken (18) an dem gegenüberliegenden Endabschnitt (11) führen.

5. Halter nach Anspruch 3 oder 4, wobei die Eingriffseinrichtung des anderen Endabschnitts (10) zwei parallel zu der Längsachse des zylindrischen Körpers beabstandete Zungen (12) umfasst, die jeweils Hakenabschnitte (18, 19) aufweisen, die mit den länglichen Haken (13) des gegenüberliegenden Endabschnitts (11) in arretierenden Eingriff kommen.

6. Halter nach einem der vorangehenden Ansprüche, wobei der eine Endabschnitt (11) einen axial gekrümmten Abschnitt (20) umfasst, der parallel zu der Längsachse des zylindrischen Körpers und im Wesentlichen in der radialen Richtung elastisch ist.

7. Halter nach Anspruch 6, wobei der gekrümmte Abschnitt (20) in Bezug auf den Körper (1) nach außen gekrümmt ist.

8. Halter nach Anspruch 6 oder 7, wobei der gekrümmte Abschnitt (20) einen inneren axialen Steg (21) aufweist, der parallel zu der Längsachse des zylindrischen Körpers und von den länglichen Haken (13) beabstandet ist, wobei der innere axiale Steg so eingerichtet ist, dass er bei dem Passvorgang an einem Rohr (6) anschlägt.

9. Halter nach einem der vorangehenden Ansprüche, wobei die zwei Endabschnitte (10, 11 ) in ihrer Eingriffsposition einander wenigstens teilweise überdecken.

10. Halter nach einem der vorangehenden Ansprüche, der aus einem Stück, vorzugsweise aus dünnem Blech, besteht.

11. Halter nach einem der Ansprüche 1-10, wobei die Befestigungseinrichtung (25) ein separates Teil ist, das mit dem Körper (1) zu verbinden ist.

## Revendications

1. Organe de maintien de conduite de descente, comprenant un corps cylindrique (1) destiné à serrer la conduite (6) et un dispositif de fixation (2, 3 ; 25) dépassant du corps et destiné au montage de l'organe de maintien sur un mur (4) ou analogue, le corps étant élastique et ayant deux parties d'extrémité (10, 11) qui sont opposées en direction circonférentielle et pratiquement diamétralement opposées à une partie (9) du corps dont dépasse le dispositif de fixation; les deux parties d'extrémité (10, 11) du corps ayant des dispositifs (12, 13) de coopération mutuelle pourvus de crochets pour le montage et le serrage du corps autour d'une conduite, **caractérisé en ce que** ladite partie (9) du corps (1) dont dépasse le dispositif de fixation (2, 3 ; 25) a une gorge (22) qui s'étend parallèlement à l'axe longitudinal du corps cylindrique et se courbe vers l'extérieur du corps cylindrique, la gorge (22) donnant un effet de rétablissement élastique sur les deux parties d'extrémité (10, 11).

2. Organe de maintien selon la revendication 1, dans lequel le dispositif de coopération (12, 13) a un effet d'enclenchement élastique.

3. Organe de maintien selon la revendication 1 ou 2, dans lequel le dispositif de coopération d'une première partie d'extrémité (11) comporte une partie de bord qui est parallèle à l'axe longitudinal du corps cylindrique et a au moins un crochet allongé (13) destiné à coopérer avec le dispositif de coopération (12) de l' autre partie d'extrémité (10), l'autre partie d'extrémité comprenant au moins un crochet (18) de coopération par blocage avec les crochets allongés (13).

4. Organe de maintien selon la revendication 3, dans lequel le dispositif de coopération (12) de l'autre partie d'extrémité (10) a des flasques ( 16, 17) de guidage des crochets allongés (13) en coopération avec les crochets (18) de la partie d'extrémité opposée (11) dans l'opération de montage.

5. Organe de maintien selon la revendication 3 ou 4, dans lequel le dispositif de coopération-de l'autre partie d'extrémité (10) comprend deux languettes espacées (12) en parallèle avec l'axe longitudinal du corps cylindrique, qui ont chacune des parties de crochet (18, 19) destinées à coopérer par blocage avec les crochets allongés (13) de la partie d'extrémité opposée (11).

6. Organe de maintien selon l'une quelconque des revendications précédentes, dans lequel la première partie d'extrémité (11) comprend une partie axiale courbe (20) qui est parallèle à l'axe longitudinal du corps cylindrique et élastique essentiellement en direction radiale.

7. Organe de maintien selon la revendication 6, dans lequel la partie courbe (20) est courbée vers l'extérieur par rapport au corps (1).

8. Organe de maintien selon la revendication 6 ou 7, dans lequel la partie courbe (20) a une arête axiale interne (21), qui est parallèle à l'axe longitudinal du corps cylindrique et placée à distance des crochets allongés (13), l'arête axiale interne étant destinée à être en butée contre la conduite (6) dans l'opération de montage.

9. Organe de maintien selon l'une quelconque des revendications précédentes, dans lequel les deux parties d'extrémité (10, 11), en position de coopération, se recouvrent au moins partiellement.

10. Organe de maintien selon l'une quelconque des revendications précédentes, qui est formé en une seule pièce, de préférence d'une mince feuille métallique.

11. Organe de maintien selon l'une quelconque des revendications 1 à 10, dans lequel le dispositif de fixation (25) est une partie séparée destinée à être raccordée au corps (1).
